# EUROPEAN PATENT SPECIFICATION

(11) **EP 1 291 250 B1**
(45) Date of publication and mention of the grant of the patent: **17.11.2004**
(21) Application number: 02019183.9
(22) Date of filing: 02.09.2002
(51) Int. Cl.: B60R 21/34

(54) **Inflatable external airbag system**
Externer aufblasbarer Luftsack
Système à coussin gonflable extérieur

(30) Priority: 06.09.2001 US 317179 P; 01.02.2002 JP 2002025881
(43) Date of publication of application: 12.03.2003
(73) Proprietor: TAKATA CORPORATION, Minato-ku, Tokyo 106-8510 (JP)
(72) Inventor: Sawa, Tomohiro, Minato-ku, Tokyo 106-8510 (JP)
(74) Representative: Banzer, Hans-Jörg, Dipl.-Ing.

(56) References cited:
- EP-A- 0 967 128
- DE-A- 2 711 338

## Description

### [Industrial Field of the Invention]

The present invention relates to an inflatable external airbag system of a motor vehicle for protection of people outside of the motor vehicle in the event of a collision between the motor vehicle and a pedestrian, a bicycle, or a motorcycle, by preventing the pedestrian, a rider of the bicycle, or a rider of the motorcycle (hereinafter generally referred to as "pedestrian") from directly colliding with a windshield, thereby protecting the pedestrian.

### [Related Art]

As a motor vehicle collides with a pedestrian, a bicycle, or a motorcycle, the pedestrian, a rider of the bicycle, or a rider of the motorcycle, may be hit at his or her lower body with a front body of the motor vehicle so as to jump onto a hood covering the top of the vehicle front body and may secondly collides with a windshield.

Japanese Unexamined Utility Model Publication No. H06-74533 discloses an inflatable external airbag system as a pedestrian protective airbag system of which an airbag is deployed from a rear portion of a hood along an outer surface of the windshield, thereby preventing a pedestrian from directly colliding with a windshield of a motor vehicle. Hereinafter, referring to Fig. 5, the inflatable external airbag system of this publication will be described.

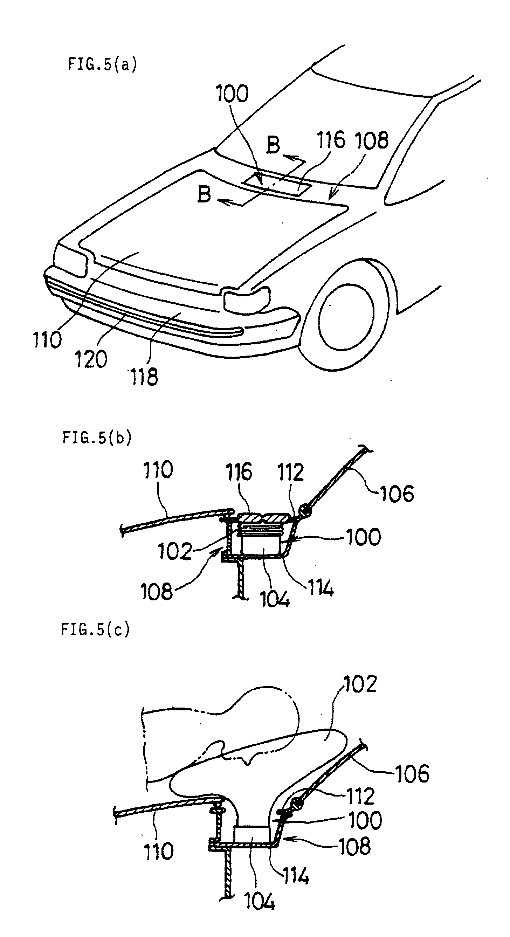

Fig. 5(a) is a perspective view of a front body of the motor vehicle equipped with the inflatable external airbag system, Fig. 5(b), 5(c) are sectional views taken along the line B-B of Fig. 5(a). It should be noted that Fig. 5(b) shows a normal state (without a collision between the motor vehicle and pedestrian) of the inflatable external airbag system, Fig. 5(c) shows a state with a deployed airbag of the inflatable external airbag system.

The inflatable external airbag system 100 comprises: an airbag 102, a gas generator (inflator) 104 for inflating the airbag 102. The gas generator 104 is disposed in a cowl top 108, having a container shape, located beneath a windshield (front windscreen glass) 106 of the motor vehicle. The airbag 102 is folded and accommodated in the cowl top 108. The cowl top 108 is adjacent to the rear end (as seen in the longitudinal direction of the vehicle body) of a hood 110 covering the top of the vehicle front body.

The cowl top 108 comprises: a cowl top outer panel 112 exposed on the top of the vehicle front body, a cowl top inner panel 114 composing the bottom of the cowl top 108. The cowl top outer panel 112 is provided with an opening for allowing the airbag 102 to be deployed over the top of the vehicle front body. The opening is positioned above the airbag 102 accommodated in the cowl top 108. In the normal state, a lid 116 is disposed to close the opening.

The front end of the motor vehicle such as a front bumper 118 is provided with a contact detection sensor 120 for sensing a collision between the motor vehicle during running and a pedestrian, a bicycle, or a motorcycle. In the inflatable external airbag system 100 is structured so that, as the contact detection sensor 120 senses the collision, the gas generator 104 is triggered to introduce gas into the airbag 102, thereby inflating the airbag 102.

As the motor vehicle equipped with the inflatable external airbag device 100 collides with a pedestrian, a bicycle, or a motorcycle, the contact detection sensor 120 senses the collision, gas is introduced from the gas generator 104 to the inside of the airbag 102, thereby inflating the airbag 102. Then, the airbag 102 pushes to open the lid 116 attached to the opening of the cowl top 108 to expand over the top of the vehicle front body and is deployed from the rear portion of the hood 110 along the outer surface of the windshield 106 as shown in Fig. 5(c).

Therefore, even if the pedestrian, who is hit onto the hood 110 as a result of the collision with the motor vehicle, plunges into the windshield 106, the airbag 102 receives the pedestrian and thus prevents the pedestrian from directly colliding with the windshield 106.

### [Problems to be resolved by the Invention]

In the inflatable external airbag system 100, the airbag 102 is easily affected by wind direction and wind pressure because the airbag 102 is exposed to air around the top of the front body of the running vehicle when the airbag 102 is deployed from the rear portion of the hood 110 along the outer surface of the windshield 106. Accordingly, it may be sometimes difficult to deploy the airbag 102 into a desired position.

From DE 27 11 338 A1, which corresponds to the preamble of claim 1, an airbag arrangement is known, which is designed to protect a pedestrian from injuries occurring in case of an accident when the pedestrian hits the cowl area of a motor vehicle. The airbag is arranged to cover the cowl, the lower portion of the windshield, and the rear portion of the hood. In particular, an arrangement is described in which the rear end of the hood hangs over the airbag and deflects the airbag toward the windshield. The hood may be moved upward as a whole by the expanding airbag. However, the arrangement is not designed to securely deploy the airbag into a desired position such that a substantial part of the windshield can be covered.

It is an object of the present invention to provide an inflatable external airbag system which can securely deploy its airbag into a desired position with little or no influence of wind direction and/or wind pressure around the top of a vehicle.

### [Means to Solve the Problems]

According to the present invention, this object is achieved by an inflatable external airbag system as defined by claim 1. The dependent claim defines a preferred and advantageous embodiment of the invention.

The inflatable external airbag system of the present invention has an airbag arranged to be deployed from a rear portion of a hood along an outer surface of a windshield of a motor vehicle and a deployment direction regulating member which hangs over the airbag, being deployed, from the front side of the motor vehicle to deflect the deployment of the airbag toward the windshield. The deployment direction regulating member is pivotably mounted in the rear portion of the hood to form a flap opening upwardly when the airbag starts to be inflated.

According to the inflatable external airbag system of the present invention as mentioned above, the deployment direction regulating member hangs over the airbag, during being deployed, from the front side of the vehicle and opens like a flap, thereby deflecting the deployment of the airbag toward the windshield. Therefore, the inflatable external airbag system can securely deploy the airbag into a desired position with little or no influence of wind direction and/or wind pressure around the top of a vehicle during running.

According to the structure mentioned above, in the normal state, the deployment direction regulating member is not conspicuous and thus never spoils the appearance of the top surface of the vehicle front body. In addition, the deployment direction regulating member can ensure the deployment of the airbag from the rear portion of the hood along the outer surface of the windshield.

### [Brief Explanation of the drawings]

Figs. 1(a), 1(b) are sectional views of a front body of a motor vehicle equipped with an inflatable external airbag system according to an embodiment of the present invention.
Fig. 2 is a sectional view showing a front portion of a motor vehicle equipped with an inflatable external airbag system according to an another embodiment of the present invention.
Fig. 3 is a sectional view showing a front portion of a motor vehicle equipped with an inflatable external airbag system according to a further another embodiment of the present invention.
Fig. 4 is a sectional view showing a front portion of a motor vehicle equipped with an inflatable external airbag system according to a still another embodiment of the present invention.
Figs. 5(a)-5(c) are explanatory view of an example of a conventional inflatable external airbag system.

### [Embodiments for carrying out the Invention]

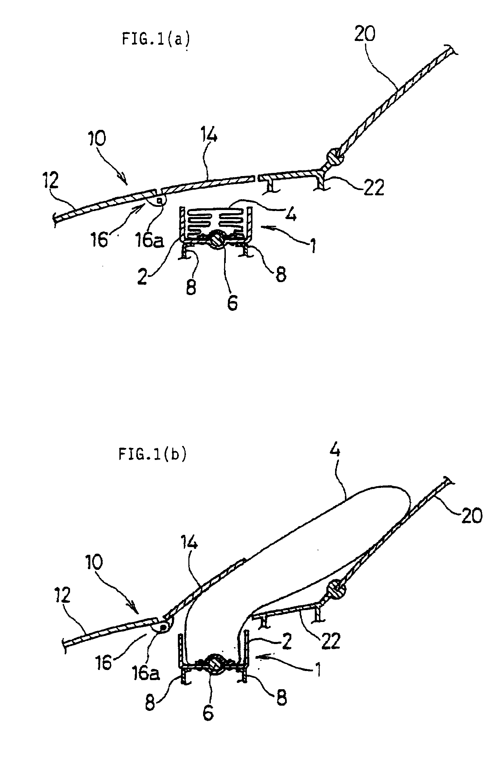

Hereinafter, embodiments of the present invention will be described with reference to the attached drawings. Figs. 1(a), 1(b) are sectional views of a front body of a motor vehicle equipped with an inflatable external airbag system according to an embodiment of the present invention, wherein Fig. 1 (a) shows a normal state of the inflatable external airbag system and Fig. 1(b) shows a state with a deployed airbag of the inflatable external airbag system. In the following description, the term "longitudinal direction" means the fore and aft direction of the motor vehicle.

The inflatable external airbag system 1 comprises: a container-line retainer (airbag holding member) 2 which has an opening for airbag deployment formed in its top, and an airbag 4 which is normally folded and accommodated in the retainer 2, a gas generator (inflator) 6 for inflating the airbag 4. The airbag system 1 is disposed in a space behind a rear area (in the longitudinal direction of the vehicle) of a hood 10 covering the top of the vehicle front body, wherein the retainer 2 is fixed to a vehicle member (not shown) through a bracket 8.

In this embodiment, the hood 10 comprises a first hood portion 12 composing the front half (in the longitudinal direction of the vehicle) as a main portion thereof, and a second hood portion 14, composing the rear half thereof, which is a separate member from the first hood portion 12 and acts as a deployment direction regulating member. The open top of the retainer 2 is normally covered by the second hood portion 14.

The first hood portion 12 is secured as a whole to the vehicle body and the second hood portion 14 is connected to the first hood portion 12 so that the front end of the second hood portion 14 is coupled to the rear end of the first hood portion 12 via a hinge 16. The hinge 16 has a pivot shaft extending in a direction parallel to the width direction of the vehicle. The second hood portion 14 can pivot about the pivot shaft 16a in the vertical direction just like a flap.

The second hood portion 14 normally extends in the horizontal direction to have an upper surface flush with the upper surface of the first hood portion 12 and to cover the open top of the retainer 2. As the airbag 4 starts to be inflated, the second hood portion 14 is pushed by the airbag 4 and thus pivots upwardly about the pivot shaft 16a of the hinge 16 just like a flap so as to open the open top of the retainer 2. At this point, the second hood portion 14 hangs over the airbag 4 being deployed, thereby regulating the deployment direction of the airbag 4 to deflect the deployment toward the windshield 20 as shown in Fig. 1(b).

A cowl top 22 is arranged at a location beneath the windshield 20. The cowl top 22 is normally adjacent to the rear end of the second hood portion 14 and has an upper surface flush with the upper surface of the second hood portion 14 (that is, the upper surface of the hood 10).

The front end of the motor vehicle such as a front bumper (not shown) is provided with a contact detection sensor (not shown) for detecting when the motor vehicle collides with a pedestrian, a bicycle, or a motorcycle. In the inflatable external airbag system 1 is structured so that, as the contact detection sensor senses the collision, the gas generator 6 is triggered to introduce gas into the airbag 4, thereby inflating the airbag 4.

As the motor vehicle equipped with the inflatable external airbag system 1 collides with a pedestrian, a bicycle, or a motorcycle, the contact detection sensor senses the collision, gas is introduced from the gas generator 6 to the inside of the airbag 4, thereby starting the inflation of the airbag 4. Then, according to the inflation of the airbag 4, the second hood portion 14 pivots upwardly so that the airbag 4 expands upwardly through the open top of the retainer 2. During this, the second hood portion 14 hangs over the airbag 4 being deployed to regulate the deployment direction of the airbag 4 to deflect the deployment toward the windshield 20. Therefore, the airbag 4 is guided by the second hood portion 14 so as to be deployed from the rear portion of the hood 10 along the outer surface of the windshield 20.

Therefore, even if the pedestrian, who is hit onto the hood 10 as a result of the colliding with the motor vehicle, plunges into the windshield 20, the airbag 4 deployed from the rear portion of the hood 10 along the outer surface of the windshield 20 receives the pedestrian and thus prevents the pedestrian from directly colliding with the windshield 20.

In the inflatable external airbag system 1, the hood portion 14 as the deployment direction regulating member hangs over the airbag 4 being deployed from the front side of the vehicle so as to regulate the deployment direction of the airbag 4 to deflect the deployment toward the windshield 20. Therefore, the inflatable external airbag system 1 can securely deploy the airbag 4 into a desired position with little or no influence of wind direction and/or wind pressure around the top of a vehicle during running.

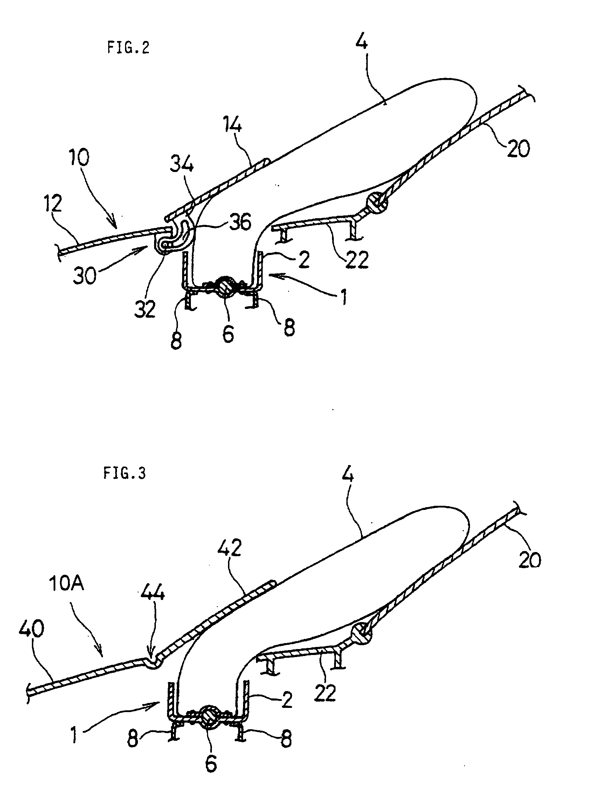

In this embodiment, as the hinge for pivotally coupling the front end of the second hood portion 14 and the rear end of the first hood portion 12, various arrangements that can be supposed by persons skilled in the art may be employed. Fig. 2 shows another arrangement of the hinge for the second hood portion 14. Fig. 2 is a sectional view showing a front portion of a motor vehicle equipped with an inflatable external airbag system according to an another embodiment of the present invention, in which the airbag of the inflatable external airbag system is shown in its deployed state. In Fig. 2, elements corresponding or similar to those discussed above with regard to Fig. 1 have the same reference numeral.

In this embodiment, the front end of a second hood portion 14 as the deployment direction regulating member is coupled to the rear end of a first hood portion 12, which composes the front half as a main portion of the hood 10 and is secured as a whole to the vehicle body, via a hinge 30. The hinge 30 has a pivot shaft (not shown) extending in a direction parallel to the width direction of the vehicle just like the aforementioned hinge 16. The second hood portion 14 can pivot about the pivot shaft 16a in the vertical direction just like a flap.

The hinge 30 includes a stopper pin 32 for regulating the opening angle of the second hood portion 14 in the upward direction. The stopper pin 32 projects from the hinge 30 to have its axis extending in a direction parallel to the width direction of the vehicle. The second hood portion 14 is provided with a guide member 34 having a guide groove 36 into which the stopper pin 32 is fitted. As shown in Fig. 2, the guide groove 36 is formed to extend downwardly from a portion near the back of the second hood portion 14 and extend a predetermined length toward the front of the vehicle. In addition the guide groove 36 is curved in an arc of which the center of curvature is said pivot shaft to have a predetermined radius of curvature.

As the airbag 4 starts to be inflated, the second hood portion 14 pivots upwardly about the pivot shaft of the hinge 30 according to the inflation of the airbag 4. During this, the stopper pin 32 moves within the guide groove 36 of the guide member 34 which moves upwardly about the pivot shaft integrally with the second hood portion 14. After that, the stopper pin 32 comes into contact with the rear end (as seen in the moving direction of the guide member 34) of the guide groove 36 so as to stop the pivotal movement of the second hood portion 14. Therefore, the opening angle of the second hood portion 14 is regulated to prevent the second hood portion 14 from further opening even with the pressure from the airbag.

The other components of the inflatable external airbag system 1 and the motor vehicle of this embodiment are the same as those of the aforementioned inflatable external airbag system 1 and the motor vehicle.

Though the rear half of the hood as the deployment direction regulating member is a separate member from the front half of the hood as the main part and the portions are coupled with each other via the hinge in the aforementioned embodiments, the rear half of the hood as the deployment direction regulating member may be integrally formed with the front half as the main part as shown in Fig. 3. Fig. 3 is a sectional view showing a front portion of a motor vehicle equipped with an inflatable external airbag system according to a further another embodiment of the present invention, in which the airbag of the inflatable external airbag system is shown in its deployed state. In Fig. 3, elements corresponding or similar to those discussed above with regard to Fig. 1 have the same reference numeral.

In this embodiment, a hood 10A is divided into a first area 40 which composes the front half as a main portion thereof and is secured as a whole to the vehicle body and a second area 42 as the deployment direction regulating member which composes a rear portion thereof and continuously extends from the first area 40. The inflatable external airbag system 1 is disposed in a space behind the second hood area 42 of the hood 10A so that the open top of the retainer 2 is covered by the second hood area 42.

A bending guide 44 is formed along the boundary between the first hood area 40 and the second hood area 42 of the hood 10A. The bending guide 44 is composed of a concave or convex groove extending in the width direction of the vehicle.

As the airbag 4 starts to be inflated, the second hood area 42 is pushed upwardly by the inflation of the airbag 4 and is thus bent at the bending guide 44, whereby the second hood area 42 positioned at the rear side of the bending guide 44 opens upwardly just like a flap.

Since the second hood area 42 is connected to another member of the vehicle body with tethers (band-like members, not shown). Therefore, the second hood area 42 is stopped from further opening by the tethers when it opens at a predetermined angle. (It should be noted that various arrangements that can be supposed by persons skilled in the art may be employed as the arrangement for regulating the opening angle of the second hood area 42.)

Therefore, as the airbag 4 starts to be inflated, the second hood area 42 is bent at the bending guide 44 with the pressure from the airbag 4 so as to open upwardly. When the second hood area 42 opens at the predetermined angle, the second hood portion 42 hangs over the airbag 4 from the front side of the vehicle so as to regulate the deployment direction of the airbag 4 to deflect the deployment toward the windshield 20.

The other components of the inflatable external airbag system 1 and the motor vehicle of this embodiment are the same as those of the aforementioned inflatable external airbag system 1 and the motor vehicle shown in Fig. 1.

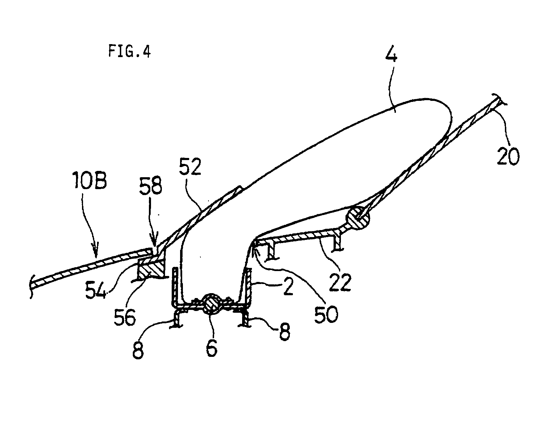

Though the rear area of the hood is structured as the deployment direction regulating member in the aforementioned embodiments, another member such as the cowl adjacent to the rear portion of the hood may be structured as the deployment direction regulating member as shown in Fig. 4. Fig. 4 is a sectional view showing a front portion of a motor vehicle equipped with an inflatable external airbag system according to a still another embodiment of the present invention, in which the airbag of the inflatable external airbag system is shown in its deployed state. In Fig. 4, elements corresponding or similar to those discussed above with regard to Fig. 1 have the same reference numeral.

In this embodiment, an opening 50 is formed between a hood 10B and a cowl top 22 in order to allow the airbag 4 to expand over the top of the vehicle front body. A cowl 52 as the deployment direction regulating member is arranged to close the opening 50. The inflatable external airbag system 1 is disposed in a space below the opening 50 so that the open top of the retainer 2 is covered by the cowl 52.

A mount bracket 54 is disposed at the front end of the cowl 52. The cowl 52 is connected to a vehicle member (another body member besides the hood 10B) 56 through the mount bracket 54. A bending guide 58 is formed along the corner of the boundary between the mount bracket 54 and the front edge of the cowl 52 to extend in the width direction of the vehicle.

As the airbag 4 starts to be inflated, the cowl 52 receives the pressure from the airbag 4 and is thus bent at the bending guide 58, whereby the cowl 52 positioned at the rear side of the bending guide 58 opens upwardly just like a flap.

When the cowl 52 opens at a predetermined angle, the comer along the front edge of the cowl 52 where the bending guide 58 is formed comes in contact with the rear edge of the hood 10B. Therefore, even with further pressure from the airbag 4, the cowl 52 is stopped by the rear edge of the hood 10B and is thus prevented from further opening. Besides the aforementioned arrangement, another arrangement may be employed. For example, the rear end portion of the cowl 52 may be connected to another vehicle body member by tethers (not shown), whereby the tethers stops further opening of the cowl 52 when the cowl 52 opens at the predetermined angle. Further another arrangement for regulating the opening angle of the cowl 52 may be employed.

Therefore, as the airbag 4 starts to be inflated, the cowl 52 is bent at the bending guide 58 with the pressure from the airbag 4 so as to open upwardly. When the cowl 52 opens at the predetermined angle, the cowl 52 hangs over the airbag 4, being deployed, from the front side of the vehicle so as to regulate the deployment direction of the airbag 4 to deflect the deployment toward the windshield 20.

It should be noted that normally the cowl 52 closes the opening 50 and substantially extends in the horizontal direction to have its upper surface flush with the upper surface of the hood 10B.

The other components of the inflatable external airbag system 1 and the motor vehicle of this embodiment are the same as those of the aforementioned inflatable external airbag system 1 and the motor vehicle.

In the aforementioned embodiment, the cowl 52 may compose a front portion of the cowl top 22.

### [Effects of the Invention]

As described above, the present invention can provide an inflatable external airbag system which can securely deploy its airbag into a desired position from a rear portion of a hood along a windshield with little or no influence of wind direction and/or wind pressure around the top of a running vehicle.

## Claims

1. An inflatable external airbag system (1) having an airbag (4) which can be deployed from a rear portion of a hood (10; 10A; 10B) of a motor vehicle, wherein the system comprises
a deployment direction regulating member (14; 42; 52) which hangs over the airbag (4), being deployed, from the front side of the motor vehicle to deflect the deployment of the airbag (4) toward a windshield (20) of the motor vehicle, **characterized in that**
the airbag is arranged to be deployed along an outer surface of the windshield (20), and
the deployment direction regulating member (14, 42, 52) is pivotably mounted in the rear portion of the hood to form a flap opening upwardly when the airbag (4) starts to be inflated.

2. An inflatable airbag system as claimed in claim 1, wherein said deployment direction regulating member (14; 42) composes a rear portion of the hood (10; 10A) of the motor vehicle and is pivotably coupled to a main portion of the hood (10; 10A).

3. An inflatable airbag system as claimed in claim 1 or 2, further comprising an arrangement for regulating the opening angle of the deployment direction regulating member (14, 42, 52).

## Patentansprüche

1. Aufblasbares externes Airbagsystem (1), welches einen Airbag (4) aufweist, der aus einem hinteren Abschnitt einer Motorhaube (10; 10A; 10B) eines Kraftfahrzeugs entfaltet werden kann, wobei das System ein Entfaltungsrichtung-Lenkteil (14; 42; 52) umfasst, welches von der Vorderseite des Kraftfahrzeugs über den Airbag (4), welcher entfaltet wird, hängt, um das Entfalten des Airbags (4) in Richtung einer Windschutzscheibe (20) des Kraftfahrzeugs abzulenken,
**dadurch gekennzeichnet,**
**dass** der Airbag dazu ausgestaltet ist, entlang einer äußeren Oberfläche der Windschutzscheibe (20) entfaltet zu werden, und
das Entfaltungsrichtung-Lenkteil (14, 42, 52) schwenkbar in dem hinteren Abschnitt der Motorhaube angebracht ist, so dass es eine Klappe bildet, welche sich nach oben öffnet, wenn der Airbag (4) beginnt aufgeblasen zu werden.

2. Aufblasbares Airbagsystem wie in Anspruch 1 beansprucht, wobei das Entfaltungsrichtung-Lenkteil (14; 42) einen hinteren Abschnitt der Motorhaube (10; 10A) des Kraftfahrzeugs bildet und schwenkbar an einen Hauptabschnitt der Motorhaube (10; 10A) gekoppelt ist.

3. Aufblasbares Airbagsystem wie in Anspruch 1 oder 2 beansprucht, darüber hinaus umfassend eine Anordnung zum Regulieren des Öffnungswinkels des Entfaltungsrichtung-Lenkteils (14; 42; 52).

## Revendications

1. Système à coussin gonflable extérieur (1) possédant un coussin (4) qui peut être déployé à partir d'une partie arrière d'un capot (10; 10A; 10B) d'un véhicule à moteur, dans lequel le système comprend :
un élément de régulation de la direction de déploiement (14 ; 42 ; 52) qui est suspendu au-dessus du coussin (4), en cours de déploiement, à partir du côté avant du véhicule à moteur afin de dévier le déploiement du coussin (4) vers un pare-brise (20) du véhicule à moteur, **caractérisé en ce que** :
le coussin est agencé pour être déployé le long d'une surface extérieure du pare-brise (20), et
l'élément de régulation de la direction du déploiement (14 ; 42 ; 52) est monté de manière pivotante dans la partie arrière du capot pour former une patte qui s'ouvre vers le haut lorsque le coussin (4) commence à être gonflé.

2. Système à coussin gonflable extérieur selon la revendication 1, dans lequel ledit élément de régulation de la direction du déploiement (14 ; 42) compose une partie arrière du capot (10 ; 10A) du véhicule à moteur et est relié de manière pivotante à une partie principale du capot (10 ; 10A).

3. Système à coussin gonflable extérieur selon l'une quelconque des revendications 1 ou 2, comprenant de plus un agencement pour réguler l'angle d'ouverture de l'élément de régulation de la direction du déploiement (14, 42, 52).
